**Europäisches Patentamt**

**European Patent Office**

**Office européen des brevets**

(19)

(11) Veröffentlichungsnummer : **0 175 857**
**B1**

(12) **EUROPÄISCHE PATENTSCHRIFT**

(45) Veröffentlichungstag der Patentschrift :
28.09.88

(51) Int. Cl.⁴ : **G 01 F   1/38**

(21) Anmeldenummer : **85108415.2**

(22) Anmeldetag : **06.07.85**

(54) Einrichtung zur Erfassung des Volumenstromes eines flüssigen Mediums durch ein Stellglied einer Regelstrecke sowie deren Verwendung für Regelzwecke und/oder Wärmemengenmessung.

(30) Priorität : **29.08.84 CH 4140/84**

(43) Veröffentlichungstag der Anmeldung :
**02.04.86 Patentblatt 86/14**

(45) Bekanntmachung des Hinweises auf die Patenterteilung : **28.09.88 Patentblatt 88/39**

(84) Benannte Vertragsstaaten :
**AT DE FR GB IT NL SE**

(56) Entgegenhaltungen :
EP-A- 0 069 173
DE-A- 2 812 233
DE-A- 3 003 821
DE-A- 3 244 668
GB-A-   979 181
**Die Akte enthält technische Angaben, die nach dem Eingang der Anmeldung eingereicht wurden und die nicht in dieser Patentschrift enthalten sind.**

(73) Patentinhaber : **LGZ LANDIS & GYR ZUG AG**

**CH-6301 Zug (CH)**

(72) Erfinder : **Meisser, Claudio**
**Moosstrasse 14**
**CH-6330 Cham (CH)**
Erfinder : **Marti, Josef**
**Zugerstrasse 41**
**CH-6312 Steinhausen (CH)**

(74) Vertreter : **Müller, Hans-Jürgen, Dipl.-Ing. et al**
**Müller, Schupfner & Gauger Lucile-Grahn-Strasse 38**
**Postfach 80 13 69**
**D-8000 München 80 (DE)**

## Beschreibung

Die Erfindung bezieht sich auf eine Einrichtung zur Erfassung des Volumenstroms eines flüssigen Mediums nach dem Obergegriff des Patentanspruches 1.

Eine derartige Einrichtung ist bereits aus der DE-A-2 812 233 bekannt. Außerdem ist in der DE-A-3 244 668 eine ähnliche Einrichtung beschchrieben. Durch Erfassung des momentanen Öffnungsgrades des dort vorhandenen Ventiltellers eines thermostatisch betätigten Durchgangventils und durch gleichzeitiges Messen des über dem Durchgangsventil vorhandenen Druckabfalles wird der durch das Durchggangsventil fließende Volumenstrom bestimmt. Zur Ermittlung der Druckdifferenz und/oder des Volumenstromes ist ein Hubsensor mit einem Rechner verbunden. Derartige Einrichtungen werden vor allem zur Heizkostenermittlung bei Zentralheizungsanlagen durch Ermittlung der Durchflußmengen oder auch von Wärmemengen bei strömenden Medien verwendet.

Ausgehend von dem Oberbegriff des Patentanspruchs 1 entsprechenden Stand der Technik liegt der Erfindung die Aufgabe zugrunde, die Einrichtung zu vereinfachen und eine Möglichkeit dafür zu schaffen, daß der Volumenstrom durch das Durchgangsventil allein aus dem Hub des Ventilorgans bestimmbar ist und darüber hinaus dasselbe Durchgangsventil auch als Stellglied einer Regelstrecke für eventuelle weitere Regelaufgaben einsetzbar ist, welche die Kenntnis des Druckabfalls über dem Stellglied und/oder des Volumenstroms durch das Stellglied voraussetzen.

Die Erfindung ist im Patentanspruch 1 gekennzeichnet und in Unteransprüchen sind weitere Ausbildungen beansprucht.

Trotz relativ einfachen und kompakten Aufbaus mit entsprechend geringer Störanfälligkeit werden Möglichkeiten für eine Reihe von besonderen Anwendungsfällen durch die Erfindung geboten.

Ausführungsbeispiele derselben sind im folgenden anhand der Zeichnung näher erläutert. Dabei zeigen :

Fig. 1  eine schematische Darstellung einer erfindungsgemäßen Einrichtung mit einer einen Hub des zuständigen Stellgliedes einregelnden Regelstrecke mit einem Zweipunktregler ;

Fig. 2  eine Gruppe von Diagrammen ;

Fig. 3  ein weiteres Ausführungsbeispiel der Erfindung mit einem Dreipunktregler ;

Fig. 4  eine weitere Gruppe von Diagrammen und

Fig. 5 und 6  je ein Funktionsschema.

Bevor die Einrichtung an Hand der Figuren näher beschrieben wird, erfolgt anschliessend eine Erklärung aller in der Beschreibung und in den Formeln verwendeter Grössen in der Reihenfolge, in der diese im nachfolgenden Text erstmals aufgeführt sind.

$\Delta p_v$ = Druckdifferenz über dem Ventil 4

$T_K$, $T_{K_1}$, $T_{T_2}$ = Zeitspanne während denen das Ventil 4 schliesst

$T$, $T_1$, $T_2$ = Zeitspanne während denen das Ventil 4 öffnet

$F_F(s)$ = Federkraft (beim Hub s)

$P_1$ = Druck im Raum 15

$P_2$ = Druck im Raum 14

$s$ = Hub des Ventiltellers 6

$\bar{s}$ = mittlerer Hub des Ventiltellers 6

$\dot{s}$ = mittlere Oeffnungsgeschwindigkeit des Ventiltellers 6

$\dot{s}_k$ = mittlere Schliessgeschwindigkeit des Ventiltellers 6

$t$ = Zeit

$\varepsilon_T$ = Verhältnis $T/(T + T_K)$

$\dot{V}$ = Volumenstrom durch das Stellglied 1

$f_1$, $f_2$ = Funktionen

$s_{max}$ = Hub am Ende der Zeitspanne $T$

$s_{K_{min}}$ = Hub am Ende der Zeitspanne $T_K$

$F_M$ = Kraft an der Membrane 7, 12 infolge $\Delta p_m$

$\Delta p_m$ = Druckdifferenz über der Membrane 7, 12

$F_V$ = infolge $\Delta p_v$ erzeugte Ventilkraft

$A_M$ = wirksame Membranfläche

$A_V$ = wirksame Ventilfläche

$\Delta p_r$ = Druckdifferenz über der Verengung 20

$\dot{V}_R$ = Volumenstrom durch die Verengung 20

$l$ = Länge der Verengung 20

$\rho$ = Dichte des Durchflussmediums

$\mathcal{V}$ = kinematische Viskosität des Durchflussmediums

$d$ = Durchmesser der Verengung 20

$\Delta s$ = Hubänderung

$v$ = Strömungsgeschwindigkeit

$f_v(s)$ = Ventilkennlinie des Stellgliedes 1

$d_v$ = Durchmesser des Ventilsitzes 5

$\varepsilon_S$ = Verhältnis $\dot{s}/(\dot{s} + \dot{s}_k)$

$P_P$ = Druckanstieg über der Pumpe

$\dot{V}_I$ = Istwert des Volumenstromes

$\vartheta_V$ = Vorlauftemperatur

$\vartheta_R$ = Rücklauftemperatur

$\Delta\vartheta$ = Temperaturdifferenz

$P_I$ = abgegebene Wärmemenge

$\vartheta_I$ = Raumtemperatur-Istwert

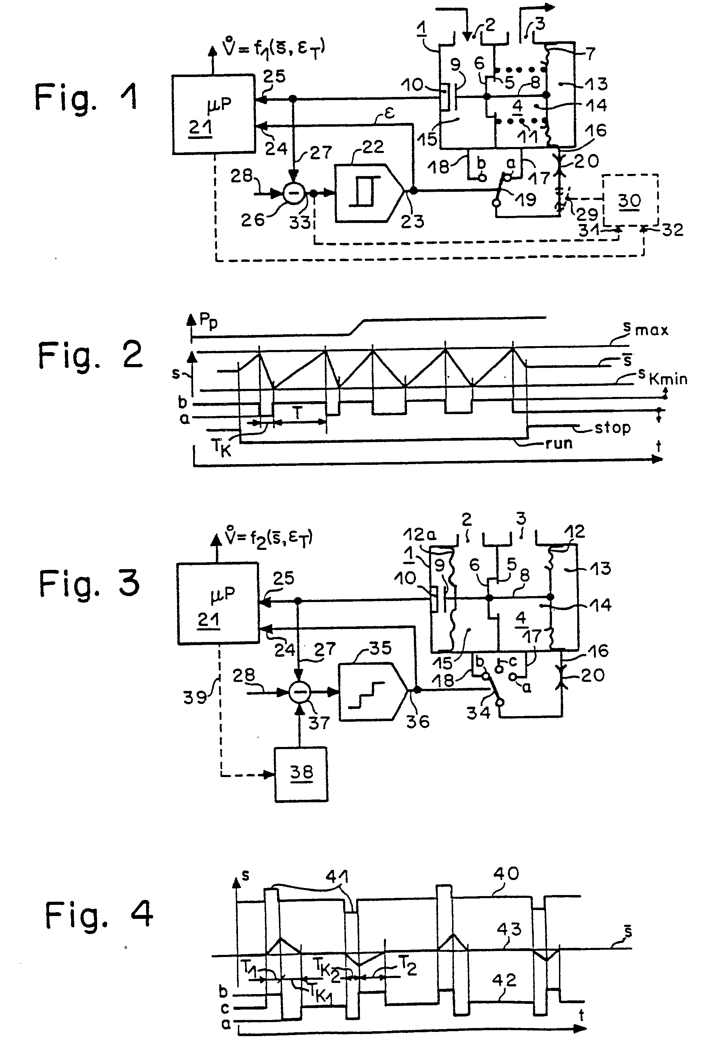

In den Fig. 1 und 3 bedeutet 1 ein als Durchgangsventil ausgebildetes Stellglied mit einem Zufluss- und einem Abflussstutzen 2 bzw. 3, das in den Kreislauf einer nicht dargestellten Warmwasserheizung geschaltet ist. Das von einer nicht dargestellten Pumpe geförderte Wasser erzeugt beim Durchströmen durch das Stellglied 1 über dessen Ventil 4 eine Druckdifferenz $\Delta p_v$. Das Ventil 4 besteht aus einem feststehenden Ventilsitz 5 und einem längsbewegbaren Ventilteller 6. Der Ventilteller 6 ist mit einem elastisch verformbaren, also dehnbaren Dichtungsglied, im beschriebenen Auführungsbeispiel mit einer Membrane 7, (Fig. 1) über ein Gestänge 8 verbunden. Ferner befindet sich am Gestänge 8 ein Geberteil 9 eines berührungslos arbeitenden Hubsensors 10. Das Gestänge 8 ist durch nicht dargestellte Federelemente radial fest, doch in Längsrichtung beweglich gelagert. Ohne äussere Kräfte liegt der Ventilteller 6 durch Federkraft am Ventilsitz 5 auf, das heisst, das Ventil 4 ist dann geschlossen. Im Beispiel der Fig. 1 wird die Schliesskraft durch eine Schraubenfeder 11 erzeugt, die sich zwischen der Membrane 7 und der den Ventilsitz 5 aufweisenden Wand des Stellgliedes 1 abstützt und damit den Ventilteller 6 auf den Ventilsitz 5 zieht.

Im Beispiel der Fig. 3 dienen zwei Stahlmembranen 12 und 12a gleichzeitig zur Erzeugung der Schliesskraft als auch der radialen Lagerung des Gestänges 8.

Die Membrane 7 bzw. 12 grenzt im Gehäuse des Stellgliedes 1 einen ersten Raum 13 gegenüber einem den Abflussstutzen 3 aufweisenden zweiten Raum 14 ab. Ferner mündet der Zuflussstutzen 2 in einen dritten Raum 15, der gegen den zweiten Raum 14 durch das ventil 4 abgetrennt ist.

Von jedem der drei Räume 13, 14, 15 führt ein Verbindungskanal 16, 17, 18 zu einem Steuerventil 19. Im Ausführungsbeispiel der Fig. 1 kann das Steuerventil 19 zwei stabile Steuerzustände a und b einnehmen. In seinem ersten Steuerzustand a verbindet das Steuerventil 19 während einer Zeitspanne $T_K$ den ersten Raum 13 über die Verbindungskanäle 16 und 17 mit dem zweiten Raum 14, wobei der Verbindungskanal 18 in diesem Zustand verschlossen ist.

Der Verbindungskanal 16 weist eine Verengung 20 auf, deren Querschnitt gegenüber dem Querschnitt der Verbindungskanäle 16, 17, 18 reduziert ist.

In seinem zweiten Steuerzustand b verbindet das Steuerventil 19 während einer Zeitspanne T über den gleichen Verbindungskanal 16 einschliesslich der Verengung 20 den ersten Raum 13 über den Verbindungskanal 18 mit dem dritten Raum 15, wobei dann der Verbindungskanal 17 verschlossen ist.

Die Wirkflächen der Membrane 7 und des Ventiltellers 6 sind zusammen mit der Federkraft $F_F$ — in der Fig. 1 der Kraft der Schraubenfeder 11, in der Figur 3 der Kraft der Stahlmembranen 12 und 12a — so gewählt, dass im zweiten Steuerzustand b des Steuerventils 19 das Ventil 4 durch die über dem Ventil 4 entstehende Druckdifferenz $\Delta p_v$ öffnet und im ersten Steuerzustand a schliesst. Dabei ist die Schliessfunktion auch dann gewährleistet, wenn bei stillstehender Pumpe, z. B. bei Stromausfall, gar keine Druckdifferenz $\Delta p_v$ über dem Ventil 4 besteht.

Im zweiten Steuerzustand b baut sich der im Raum 15 herrschende Druck $P_1$ über die Verbindungskanäle 18 und 16 einschliesslich der Verengung 20 auch im Raum 13 auf. Da der Druck $P_1$ im Raum 15 grösser ist als der im Raum 14 vorhandene Druck $P_2$, bewegt die Membrane 7 bzw. 12 entgegen der Federkraft $F_F$ den Ventilteller 6 in den Figuren 1 und 3 nach links. Die Verengung 20 mit ihrem reduzierten Querschnitt ist mitbestimmend für den zeitlichen Verlauf der Druckänderung im Raum 13 und damit auch für die mittlere Oeffnungs- und Schliessgeschwindigkeit $\dot{s}$ bzw. $\dot{s}_k$ des Ventiltellers 6. Des Oeffnen und Schliessen des Ventiles gleicht einer Exponentialfunktion. Mit $\dot{s}$ und $\dot{s}_k$ kann deren Verlauf gemittelt werden.

Im ersten Steuerzustand a des Steuerventiles 19 baut sich der im Raum 13 vorhandene Druck über die Verbindungskanäle 16 und 17 wieder auf den Druck $P_2$ ab und die Federkraft $F_F$ schliesst das Ventil 4, indem von der Membrane 7 bzw. 12 Flüssigkeit aus dem ersten Raum 13 in den zweiten Raum 14 verdrängt wird. Auch der zeitliche Ablauf dieses Vorganges ist durch die Verengung 20 beeinflusst, was weiter unten noch näher erläutert wird.

Der Hubsensor 10 ist mit einem Rechner 21 verbunden. Ferner umfasst die Einrichtung nach der Fig. 1 einen das Steuerglied 19 steuernden Regler 22, dessen Ausgangssignal den Steuerzustand des Steuerventiles 19 bestimmt. Ein Ausgang 23 des Reglers 22 ist sowohl mit einem Eingang 24 des Rechners 21 als auch mit dem Steuerventil 19 verbunden. Die Verbindung des Hubsensors 10 mit dem Rechner 21 erfolgt an dessen Eingang 25.

Der Regler 22 des Ausführungsbeispiels nach der Fig. 1 ist als Zweipunktregler mit Hysterese ausgebildet. Sein an seinem Ausgang 23 anstehendes Signal weist daher zwei definierte Zustände auf, die den Steuerzustand a bzw. b des Steuerventiles 19 bestimmen und deren zeitliche Dauer T, $T_K$ der Rechner 21 als Verhältnis

$$\varepsilon_T = \frac{T}{T + T_k}$$

erfasst, um daraus weitere physikalische Daten zu errechnen, wie dies weiter unten erläutert ist.

Der Sollwert des Reglers 22 wird von einem Differenzglied 26 abgeleitet, dessen erster Eingang 27 mit dem Hubsensor 10 verbunden ist und dessen zweiter Eingang 28 einen Sollwert für den mittleren Hub $\bar{s}$ des Ventiltellers 6 liefert. Dieser Sollwert ist als Ausgangssignal eines übergeordneten Reglers zu betrachten, wie dies weiter unten dargelegt ist.

Aus dem Gesagten geht hervor, dass der Regler 22 das Steuerventil 19 steuert, das durch Ausnutzung der Druckdifferenz $\Delta p_v$ über dem Stellglied 1 den Druck im Raum 13 und damit den Hub s des Ventiltellers 6 solcher Art beeinflusst, dass sich eine Regelung der Oeffnungsweite des Ventiles 4 durch den Regler 22 ergibt.

Das Steuerventil 19 wird zweckmässigerweise durch einen vom Ausgangssignal des Reglers 22 beeinflussten, in der Fig. 1 nicht dargestellten Elektromagneten betätigt. Dieser ist so ausgelegt, dass das Steuerventil 19 im stromlosen Zustand des Elektromagneten die Membrane 7 kurzschliesst, das heisst, den ersten und den zweiten Raum 13 bzw. 14 miteinander verbindet, wodurch das Ventil 4 unabhängig von der Druckdifferenz $\Delta p_v$ schliesst.

Aus dem Gesagten geht hervor, dass das Ventil ausserhalb seiner Schliessstellung nie zur Ruhe kommt, denn um einen bestimmten mittleren Hub $\bar{s}$ einhalten zu können, pendelt der Ventilteller 6 dauernd um diesen Wert hin und her, wie dies im Diagramm der Fig. 2 für den Hub s dargestellt ist. Während der Zeitspanne T öffnet das Ventil 4, während der Zeitspanne $T_K$ schliesst es. Die Grösse der Zeitspannen T und $T_K$ ergeben sich aus der Schaltdifferenz (Hysterese) des Zweipunktreglers 22, aus der Druckdifferenz $\Delta p_v$, und aus dem Querschnitt der Verengung 20. Der Widerstand der Verengung 20 hat keinen Einfluss auf die Messgenauigkeit, solange der Volumenstrom in der Verengung 20 proportional dem Druckabfall über der Verengung 20 ist. Zweckmässigerweise dient als Verengung 20 ein Kapillarrohr, das in einem weiten Durchflussbereich diese Forderung erfüllt (Hagen-Poiseuil). Die lichte Weite und die Länge des Kapillarrohres sind mitbestimmend für die mittlere Oeffnungs- und Schliessgeschwindigkeit $\dot{s}$ bzw. $\dot{s}_k$ des Ventiltellers 6.

In der Ausführung nach der Fig. 1 kann ferner noch eine zusätzliche Stopeinrichtung verwendet werden, die in der Figur 1 gestrichelt dargestellt ist. Im Verbindungskanal 16 ist ein zusätzliches Ventil 29 vorhanden zum Absperren der Strömung durch den Verbindungskanal 16, das von einem Steuerblock 30 betätigt wird, und zwar vorteilhafterweise ebenfalls durch einen Elektromagneten, doch so, dass bei stromlosem Elektromagneten das Ventil 29 den Durchfluss freigibt. Der Steuerblock 30 ist über zwei Eingänge 31 und 32 mit einem Ausgang 33 des Differenzgliedes 26 bzw. mit dem Rechner 21 verbunden und bewirkt, dass das Ventil 29 zu wenigstens einem Teil der Zeit seinen Durchfluss sperrt und zwar dann, wenn der Istwert mit dem Sollwert am Regler 22 übereinstimmt. Die nötigen Befehle dazu erhält der Steuerblock 30 über seine Eingänge 31 und 32. Weil bei gesperrtem Ventil 29 kein Flüssigkeitsaustausch zum oder vom Raum 13 mehr stattfinden kann, bleibt der Ventilteller 6 in der beim Absperren des Ventiles 29 vorhandenen Stellung stehen, und zwar unabhängig von der Stellung des Steuerventiles 19. Im Diagramm der Fig. 2 ist die Stellung des zusätzlichen Ventiles 29 durch die unterste Linie angedeutet, wobei in der Stellung « run » der Durchfluss durch das Ventil 29 freigegeben ist und der Regelvorgang wie beschrieben abläuft, während in der Stellung « stop » der Durchfluss durch das Ventil 29 gesperrt ist und dann der Ventilteller 6 in seiner momentanen Stellung verharrt. Die Durchflusssperrung wird ausgelöst, wenn der Hub s des Ventiltellers 6 seinen mittleren Wert $\bar{s}$ aufweist (Fig. 2).

Durch die beschriebene Stopeinrichtung wird es möglich, zeitweilig den Regelvorgang und damit das Hin- und Herschalten des Steuerventiles 19 zu unterbrechen, um dem Verschleiss vorzubeugen und um Energie zu sparen. Letzteres ist insbesondere von Bedeutung, wenn eine batteriebetriebene Einrichtung vorliegt. Damit im Zusammenhang ist zu erwähnen, dass aus Energiespargründen auch eine bistabile Betätigung der Steuerventile 19 und/oder 29 denkbar ist, bei der jeder Stellungswechsel durch einen kurzen Impuls ausgelöst wird.

Im Ausführungsbeispiel nach den Fig. 3 und 4 dient ein Steuerventil 34, das neben den beiden für das Steuerventil 19 ersten und zweiten Steuerzuständen a bzw. b noch einen dritten Steuerzustand c aufweist. Im dritten Steuerzustand c sind alle Zuleitungen zu den drei Räumen 13, 14, 15 verschlossen. Als Regler dient in dieser Anwendung ein Dreipunktregler 35, dessen Auf-Befehl am Steuerventil 34 während der Zeit T den zweiten Steuerzustand b, dessen Zu-Befehl während der Zeit $T_K$ den ersten Steuerzustand a erzeugt und dessen Neutralstellung bei abgeglichener Regelstrecke den dritten Steuerzustand c bewirkt.

Das Steuerventil 34 mit seinen drei Stellungen kann aus verschiedenen magnetisch betätigten Einzelventilen aufgebaut sein. Darunter fällt auch die Verwendung des Steuerventiles 19 nach der Fig. 1 zusammen mit dem zusätzlichen Steuerventil 29 (Stopventil). Im letztgenannten Fall muss der Durchfluss durch das Steuerventil 29 in der Neutralstellung des Dreipunktreglers 35 gesperrt sein und es wird an Stelle des Steuerblockes 30 (Fig. 1) vom Ausgang 36 des Dreipunktreglers 35 immer dann gesperrt, wenn an einem Differenzglied 37 des Dreipunktreglers 35 der Istwert gleich dem Sollwert ist.

Einer vorteilhafte Anordnung ergibt sich auch, wenn das Steuerventil 19 und 34 als Dreh-Schieberventil ausgebildet ist, das durch einen vom Regler 22, 35 angesteurten Motorantrieb betätigt wird. Eine Rückstelleinrichtung bewirkt, dass das Steuerventil 19, 34 selbsttätig, also auch bei Stromausfall in die erste Stellung a zurück kehrt. Dazu ist eine Federrückstellung geeignet, doch sind auch rein elektrische Rückstellmöglichkeiten denkbar, wie Energiespeicherung in einem Kondensator zum Rücklauf des Antriebes bei Stromausfall.

Im Ausführungsbeispiel nach den Fig. 3 und 4 ist ferner ein Störgrössengeber 38 angeordnet, der auf das Differenzglied 37 einwirkt. Er ist über eine Verbindung 39 an den Rechner 21 angeschlossen und erhält von dort periodisch wiederkehrende, in abwechselnder Richtung wirkende Störsignale 41 zur impulsweisen Verstimmung des Regelkreises in Auf- und Zu-Richtung und zur zwangsweisen Auslösung eines Messzyklus mit den Zeitspannen T und $T_K$, um daraus wieder, wie dies für die Fig. 1 beschrieben ist, das Verhältnis $\varepsilon_T$ zu bilden, was nachfolgend beschrieben wird.

Die vom Störgrössengeber 38 abgegebenen, in der Fig. 4 als Diagramm 40 über der Zeit t dargestellten Störsignale 41, wirken über das Differenzglied 37 am Regler 35 als zeitlich begrenzte Sollwertabweichungen. Sie lösen am Ausgang 36 Stellbefehle an das Steuerventil 34 aus. Der zeitliche Verlauf der Stellbefehle und die daraus resultierende Stellung des Steuerventiles 34 während den Zeiten T und $T_K$ zeigt ein zweites Diagramm 42. Ausserhalb der Zeiten T und $T_K$ ist der Regler 35 abgeglichen, das Steuerventil 34 befindet sich dann in seiner Mittelstellung, d. h. in seinem dritten Steuerzustand c. Die Steuerventil-Stellungen während den Zeiten T und $T_K$ bewirken Aenderungen des Hubes s, wie dies ein drittes Diagramm 43 für den Hub s zeigt, wobei in der Fig. 4 die Zeiten T und $T_k$ noch unterschieden werden in $T_1$, $T_{K_1}$, die nach einem Störsignal 41 in Richtung Auf, bzw. in $T_{K_2}$, $T_2$, die nach einem Störsignal 41 in Richtung Zu ablaufen. Der Rechner 21 erfasst über seinen Eingang 24 die am Ausgang 36 anstehenden Stellbefehle und bildet aufgrund mindestens zweier, aufeinanderfolgender Störsignale 41, das heisst eines Auf- und eines Zu-Befehles, das Verhältnis $\varepsilon_T$.

In ähnlicher Weise, wie dies beim Zweipunkteregler 22 vorangehend beschrieben wurde, ist es sinnvoll, beim Dreipunktregler 35 ebenfalls zum Energiesparen die Befehle zum Störgrössengeber 38 wenigstens zeitweilig zu unterbinden, was der Rechner jedoch nur dann ausführt, wenn wenigstens zwei nacheinander errechnete Verhältnisse $\varepsilon_T$ einander gleich sind. Dieser Zustand wird dann zweckmässigerweise so lange aufrecht erhalten, bis der Regler 35, durch das Verhalten der Regelstrecke bedingt, wieder einen Stellbefehl abgibt.

In beiden beschriebenen Ausführungsbeispielen ist es dem Rechner 21 durch Auswertung des Verhältnisses $\varepsilon_T$ und des mittleren Hubes $\bar{s}$ des Ventiltellers 6 wenigstens periodisch möglich, auf Grund des zeitlichen Verlaufes der am Ausgang 23 bzw. 36 des Reglers 22 bzw. 35 sowie am Hubsensor 10 anstehenden Signale die jeweils vorhandene Druckdifferenz $\Delta p_v$ über dem Stellglied 1 sowie den Volumenstrom $\dot{V}$ durch das Stellglied 1 zu bestimmen. Dazu dienen die folgenden Beziehungen :

$$\Delta p_v = f_1(\bar{s}, \varepsilon_T) \quad \text{und}$$

$$\dot{V} = f_2(\bar{s}, \varepsilon_T)$$

in denen $f_1$ und $f_2$ durch Konstanten gegebene Funktionen darstellen und $\bar{s}$ im Beispiel des Zweipunktreglers 22 (Fig. 1 und 2) den Mittelwert zwischen den am Ende der Zweitspannen T und $T_K$ erreichten Hübe $s_{max}$ bzw. $s_{K_{min}}$ bedeutet, während im Beispiel des Dreipunktreglers 35 (Fig. 3 und 4) der Rechner 21 das Verhältnis $\varepsilon_T$ aus den Werten $T_1$, $T_2$ und $T_{K_1}$ und $T_{K_2}$ berechnet und $\bar{s}$ den bei abgeglichenem Dreipunktregler 35 vorhandenen Hub s bedeutet.

Nachfolgend wird die Wirkungsweise der Einrichtungen nach den Figuren 1 bis 4 näher beschrieben und die Berechnungsgrundlagen für die Druckdifferenz $\Delta p_v$ und den Volumenstrom $\dot{V}$ näher erläutert :

Ueber den Regler 22 bzw. 35 wird eine bestimmte Ventilöffnungsstellung, also ein bestimmter mittlerer Hub $\bar{s}$ eingeregelt. Diese Oeffnungsstellung ist im Falle einer Heizungsregelung das Ausgangssignal eines Vorlauftemperaturreglers. Der Sollwert des mittleren Hubes $\bar{s}$ wird am Eingang 28 des Differenzgliedes 26 bzw. 37 eingegeben und bei beiden Regelarten trachtet der Regler 22 bzw. 35 danach, den Istwert des mittleren Hubes $\bar{s}$ durch ein entsprechendes Verhältnis $\varepsilon_T$ der Stellungen des Steuerventiles 19 bzw. 34 dem Sollwert anzupassen.

Zur Herleitung der Funktionen $f_1(\bar{s}, \varepsilon_T)$ und $f_2(\bar{s}, \varepsilon_T)$ zur Bestimmung des Druckabfalles $\Delta p_v$ und des Volumenstromes $\dot{V}$ dienen folgende Ueberlegungen :

Für das Ventil 4 gilt die Kräftegleichung

$$F_M = F_F(s) + F_V \qquad (I)$$
$$F_M = \Delta p_m \cdot A_M ; \quad F_V = \Delta p_v \cdot A_V$$

Daraus folgt :

$$\Delta p_m \cdot A_M = F_F(s) + \Delta p_v \cdot A_V \qquad (II)$$
$$\Delta p_m = \frac{F_F(s) + \Delta p_v \cdot A_V}{A_M}$$

Für das Ventil 4 gilt ferner während der Zeitspanne T, das heisst, wenn der Raum 15 über die Verengung 20 mit dem Raum 13 verbunden ist, die Druckgleichung

$$\Delta p_v = \Delta p_m + \Delta p_r \qquad \text{(III)}$$

Aus II in III eingesetzt folgt :

$$\Delta p_v = \frac{F_F(s) + \Delta p_v \cdot A_V}{A_M} + \Delta p_r \qquad \text{(IV)}$$

Nach Hagen-Poiseuil gilt in einem Rohr bei laminarer Strömung :

$$\Delta p_r = \dot{V}_R \cdot \frac{128 \cdot I \cdot \rho \cdot V}{\pi \cdot d^4} \qquad \text{(V)}$$

wobei für den Bruch die Grösse R gesetzt werden kann und für

$$\dot{V}_R = A_M \cdot \dot{s}$$
$$\Delta p_r = A_M \cdot \dot{s} \cdot R \qquad \text{(VI)}$$

Aus den Formeln IV und VI folgt :

$$\Delta p_v = \frac{F_F + \Delta p_v \cdot A_V}{A_M} + A_M \cdot \dot{s} \cdot R \qquad \text{(VII)}$$

Während der Zeitspanne $T_K$, das heisst, wenn der Raum 13 mit dem Raum 14 verbunden ist, gilt :

$$\Delta p_r = \Delta p_m = A_M \cdot \dot{s}_k \cdot R$$

und gemäss der Formel II ist

$$\Delta p_m = \frac{F_F(s) + \Delta p_v \cdot A_V}{A_M} = A_M \cdot \dot{s}_k \cdot R$$

Dies nach R aufgelöst ergibt :

$$R = \frac{F_F(s) + \Delta p_v \cdot A_V}{A_M^2 \cdot \dot{s}_k} \qquad \text{(VIII)}$$

Ferner folgt aus den Formeln VII und VIII, dass

$$\Delta p_v = \frac{F_F(s) + \Delta p_v \cdot A_V}{A_M} + A_M \cdot \dot{s} \, \frac{F_F(s) + \Delta p_v \cdot A_V}{A_M \cdot \dot{s}_k}$$

ist. Umgeformt ergibt dies aus

$$\Delta P_v = \frac{F_F(s) + \Delta p_v \cdot A_V}{A_M} \left( 1 + \frac{\dot{s}}{\dot{s}_k} \right)$$

mit

$$\dot{s} = \frac{\Delta \dot{s}}{T} \quad \text{und} \quad \dot{s}_k = \frac{\Delta s}{T_K},$$

dass

$$\Delta p_v = \frac{F_F(s) + \Delta p_v \cdot A_V}{A_M} \left( 1 + \frac{T_K}{T} \right) \qquad \text{(IX)}$$

ist. Weil für den Klammerausdruck in der Formel IX gilt

$$1 + \frac{T_K}{T} = \frac{T + T_K}{T} = \frac{1}{\varepsilon_T},$$

ergibt sich aus der Gleichung IX

$$\Delta p_v \cdot A_M \cdot \varepsilon_T = F_F(s) + \Delta p_v \cdot A_V$$

und daraus

$$\Delta p_v (A_M \cdot \varepsilon_T - A_V) = F_F(s)$$

und damit

$$\Delta p_v = \frac{F_F(s)}{A_M \cdot \varepsilon_T - A_V} \tag{X}$$

Der Rechner 21 kann somit die Druckdifferenz $\Delta p_v$ über dem Ventil 4 durch Erfassung des mittleren Hubes $\bar{s}$ und durch Bildung des Verhältnisses $\varepsilon_T$ laufend oder auch nur periodisch gemäss der Gleichung X ermitteln, ohne dass dazu Drucksensoren eingesetzt werden müssen, denn die restlichen Grössen in der Gleichung X sind durch die Abmessungen des Stellgliedes 1 fest gegeben. Mit der Kenntnis der Druckdifferenz $\Delta p_v$ über dem Stellglied ist auch der Volumenstrom $\dot{V}$ bestimmbar, was nachfolgend erläutert wird :

Für die Strömungsgeschwindigkeit v durch ein Ventil gilt allgemein :

$$v = \sqrt{\frac{2 - \Delta p_v}{\rho}} \cdot f_v(s)$$

Der Volumenstrom $\dot{V}$ durch das Stellglied 1 ergibt sich demnach zu :

$$\dot{V} = \bar{s} \cdot d_v \cdot \pi \cdot V \, ,$$

und damit ist

$$\dot{V} = \bar{s} \cdot d_v \cdot \pi \sqrt{\frac{2 \cdot \Delta p_v}{\rho}} \cdot f_v(s)$$

Aus den Gleichungen X und XI folgt

$$\dot{V} = \bar{s} \cdot d_v \cdot \pi \cdot f_v(s) \sqrt{\frac{2 \dfrac{F_F(s)}{A_M \cdot \varepsilon_T - A_V}}{\rho}}$$

$$\dot{V} = \bar{s} \cdot d_v \cdot \pi \cdot f_v(s) \sqrt{\frac{2 F_F(s)}{\rho (A_M \cdot \varepsilon_T - A_V)}} \, ,$$

woraus der Rechner 21 auch den momentanen Volumenstrom $\dot{V}$ durch das Stellglied 1 ermitteln kann.

In den beschriebenen Einrichtungen werden vom Rechner 21 der Hub s und die Stellbefehle des Reglers 22, 35 erfasst, wobei aus letzteren das Verhältnis $\varepsilon_T$ gebildet wird. Die Erfindung schliesst auch jede Verwendung eines anderen Verhältnisses in sich ein. So ist es beispielsweise möglich, auf den Eingang 24 am Rechner 21 zu verzichten und diesen nur von den Signalen des Hubgebers 10 zu beeinflussen. Der Rechner 21 bestimmt dann aus den Aenderungsgeschwindigkeiten $\dot{s}$ und $\dot{s}_k$ des Ventiltellers 6 während eines Oeffnungs- bzw. während des nachfolgenden Schliessimpulses ein Verhältnis $\varepsilon_s = \dot{s}/(\dot{s} + \dot{s}_k)$.

Daraus kann in gleicher Weise, wie das für $\varepsilon_T$ beschrieben ist, unter Berücksichtigung des mittleren Hubes $\bar{s}$ des Differenzdruck $\Delta p_v$ und der Volumenstrom $\dot{V}$ errechnet werden.

Die beiden vorangehend beschriebenen Ausführungsbeispiele der Fig. 1 und 3 schliessen den Rechner 21 in den Regelkreis nicht ein. In beiden Beispielen wird vom Regler 22 bzw. 35 ein bestimmter mittlerer Hub $\bar{s}$ einreguliert. Dies bedeutet, dass eine Aenderung des Druckanstieges $P_P$ über der Pumpe, wie dies im obersten Diagramm der Fig. 2 dargestellt ist, zu einer Aenderung des Zeitverhältnisses $\varepsilon_T$ und damit zu einer Hubänderung führt, die der Regler wieder auskorrigiert. Das heisst, eine Aenderung des Druckanstieges $P_P$ über der Pumpe, z. B. bei Laständerungen, wirkt sich als Aenderung des Volumenstromes $\dot{V}$ aus.

7

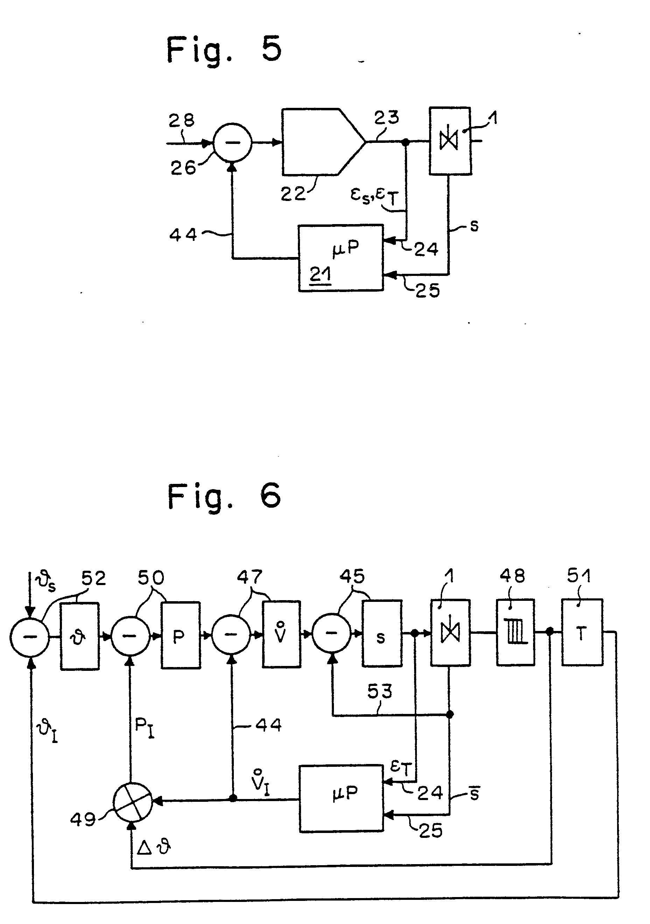

Bei Verwendung der beschriebenen Einrichtungen entsprechend der Fig. 5 werden auch von der Pumpe herrührende Druckänderungen erfasst, indem die Anordnung zur Regelung des Volumenstromes $\dot{V}$ ausgebildet ist und mindestens einen Regler 22, 35 aufweist, der seinen Sollwert mit dem vom Rechner 21 ermittelten Istwert des Volumenstromes $\dot{V}$ vergleicht. In dieser Ausführung ist der Rechner 21 auch in den Regelkreis mit einbezogen und liefert gleichzeitig Werte für die Druckdifferenz $\Delta p_v$ und den Volumenstrom $\dot{V}$, die zusätzlich auswertbar sind (z. B. Wärmemengenmessung). Die Fig. 5 zeigt eine solche Verwendung mit dem Zweipunktregler 22 entsprechend der Fig. 1, doch könnte auch ein Dreipunktregler zur Anwendung kommen. Der Ausgang 23 des Reglers 22 beeinflusst, wie für die Fig. 1 beschrieben, das Stellglied 1, sowie über den Eingang 24 den Rechner 21. Das Steuerventil ist in der Fig. 5 nicht dargestellt. Den Hub s des Ventiltellers 6 erfasst der Rechner 21 am Eingang 25. Auf das Differenzglied 26 wirkt ein Ausgang 44 des Rechners 21. Das Differenzglied 26 vergleicht den vom Rechner 21 gelieferten Istwert des Volumenstromes $\dot{V}$ mit dem Sollwert am Eingang 28. Dadurch wird der Einfluss jeder Aenderung des Druckanstieges $P_P$ über der Pumpe auskorrigiert.

Im Ausführungsbeispiel der Fig. 6 wird die Einrichtung als Kaskadenregelung für eine Raumheizung verwendet. Sie umfasst mehrere, nachfolgend beschriebene Regler, von denen jedem ein als zum Regler gehörend betrachtetes Differenzglied vorgeschaltet ist. Ein erster, auf das Steuerventil 19 bzw. 34 (Fig. 1 bzw. 3) einwirkender Regler 45 regelt den Hub s, wie dies für die Ausführungsbeispiele nach den Fig. 1 bis 4 beschrieben wurde. Eine Verbindung 53 meldet dem Regler 45 den Ist-Hub s zurück, und an den Eingängen 24 und 25 liegen wie bei den vorangehenden Ausführungsbeispielen die Signale des Reglers 45 zur Bildung des Verhältnisses $\varepsilon_T$ bzw. das dem mittleren Hub $\bar{s}$ entsprechende Signal. Ein zweiter Regler 47 vergleicht den vom Rechner 21 ermittelten Volumenstrom $\dot{V}_I$ mit dem Sollwert. Der Rechner liegt hier ebenfalls im Regelkreis. Sein Signal am Ausgang 44 bildet den Istwert für den Regler 47. Dem Stellglied 1 ist hydraulisch ein Heizstrang aus mehreren Radiatoren 48 mit einem in der Fig. 6 nicht dargestellten Vorlauf und einem Rücklauf nachgeschaltet, aus deren Temperaturen $\vartheta_V$ und $\vartheta_R$ die Temperaturdifferenz $\Delta\vartheta$ gebildet wird. Zusammen mit dem vom Rechner 21 bestimmten Volumenstrom $\dot{V}_I$ ermittelt ein ebenfalls zum Rechner 21 gehörendes Rechenglied 49 die momentan abgegebene Wärmemenge $P_I$, die als Istwert von einem dritten Regler 50 erfasst wird. Ein Raumtemperaturfühler 51 meldet den Raumtemperatur-Istwert $\vartheta_I$ an einen vierten Regler 52, dessen Ausgang den Regler 50 beeinflusst.

Die Regler 47, 50 und 52 sind alle dem auf das Steuerventil 1 wirkenden ersten Regler 45 übergeordnet. Auf diese Weise werden auftretende Störgrössen jeweils ausgeregelt, bevor sich diese über die Raumtemperatur auswirken.

Jede der beschriebenen Einrichtungen ist zur Heizkostenerfassung bei einer Warmwasserheizung ausbildbar. Dazu wird unter Berücksichtigung der Temperaturdifferenz $\Delta\vartheta$ zwischen der Vorlauftemperatur $\vartheta_V$ und der Rücklauftemperatur $\vartheta_R$ sowie des Volumenstromes $\dot{V}$ die bezogene Wärmemenge erfasst.

Dabei besteht der Hauptvorteil beim Erfindungsgegenstand darin, dass es möglich ist, den Volumenstrom $\dot{V}$ durch das für den Regelvorgang ohnehin benötigte Stellglied 1 zu ermitteln, ohne dass dazu wie beim bisherigen Stand der Technik eine zusätzliche Messeinrichtung für den Differenzdruck $\Delta p_v$ nötig ist.

Die mit geringem Aufwand erreichbare Erfassung der Druckdifferenz $\Delta p_v$ über dem Stellglied einer Regelstrecke, des Volumenstromes $\dot{V}$ durch das Stellglied sowie die Möglichkeit der gleichzeitigen Wärmemengenmessung unter Verwendung eines Rechners eröffnet viele weitere Anwendungsgebiete. Als solche sind zu erwähnen :

Die Erfassung der Wärmeentnahme einzelner Abnehmer durch den an zentraler Stelle angeordneten Rechner bei individuell geregelten, von einem gemeinsamen Vorlauf gespeisten Heizgruppen. Dabei ist es zweckmässig, deren Stellglieder in den Rücklauf zu verlegen und die Messstelle für die Rücklauftemperatur $\vartheta_R$ im Stellglied anzuordnen. Die Verbindung zwischen dem Rechner und den Stellgliedern erfolgt durch einen Datenbus oder durch eine drahtlose Vermittlungseinrichtung bei batteriebetriebenen Steuerventilen. Auch ist in einer solchen Anlage eine Pumpenregelung denkbar, denn dank dessen, dass auch die Druckdifferenz $\Delta p_v$ über jedem Stellglied ermittelt wird, kann der Rechner die Leistung der Pumpe den auftretenden Druckdifferenzen $\Delta p_v$ entsprechend anpassen, wodurch Energie eingespart und eventuelle Geräusche bei grossen Druckdifferenzen verhindert werden.

Ferner ist die Einrichtung zur Regelung und Wärmemengenmessung für einen an eine Fernheizung angeschlossenen Wärmebezüger verwendbar. Dies bietet den Vorteil, gleichzeitig weitere, vom Heizwerkbetreiber und aus messtechnischen Gründen vorgeschriebene Grenzwerte einhalten zu können. Es sind dies : Minimale Rücklauftemperatur $\vartheta_R$, maximale Vorlauftemperatur $\vartheta_V$, eine minimale Temperaturdifferenz $\Delta\vartheta$ sowie maximaler und minimaler Volumenstrom $\dot{V}$ und Wärmebezug $P_I$.

**Patentansprüche**

1. Einrichtung zur Erfassung des Volumenstromes eines flüssigen Mediums durch ein als Durchgangsventil (4) ausgebildetes, einen Zuflußstutzen (2) und einen Abflußstutzen (2) und einen Abflußstutzen (3) aufweisendes Stellglied (1) einer Regelstrecke, mit einem eine Öffnungsbewegung eines Ventilorgans (6) des Durchgangsventiles (4) entgegen einer Federkraft $F_F$ betätigenden elastisch verformbaren Dichtungsglied (7, 12), wie Membran, und mit einem Hubsensor (10) zur Erfassung der Stellung des Ventilorgans (6), aus der unter Berücksichtigung der über dem Durchgangsventil (4) vorhandenen Druckdifferenz $\Delta p_v$ der Volumenstrom $\dot{V}$ ableitbar ist, bei der ein gesteuertes Steuerventil (19, 34) über Verbindungskanäle (16, 17, 18) mit verschiedenen Räumen des Durchgangsventils (4) in Verbindung steht, dadurch gekennzeichnet, daß das Steuerventil (19 ; 34) durch mindestens einen Regler (22 ; 35, 45) steuerbar ist und einen vom Dichtungsglied (7, 12) begrenzten ersten Raum (13) des Durchgangsventils (4) über die Verbindungskanäle (16, 17, 18) in einem ersten stabilen Steuerzustand mit einem zweiten Raum (14) und in einem zweiten stabilen Steuerzustand mit einem dritten Raum (15) verbindet, daß der zweite Raum (14) den Abflußstutzen (3) und der dritte Raum (15) den Zuflußstutzen (2) aufweist, daß die Wirkflächen des Dichtungsgliedes (7, 12) und des als Ventilteller ausgebildeten Ventilorgans (6) sowie die Federkraft $F_F$ so gewählt sind, daß im zweiten Steuerzustand die über dem Durchgangsventil (4) entstehende Druckdifferenz $\Delta p_v$ dieses Durchgangsventil (4) mittels des Ventiltellers öffnet und im ersten Steuerzustand die Federkraft $F_F$ dieses Durchgangsventil (4) mittels des Ventiltellers schließt, und daß der Hubsensor (10) mit einen Rechner (21) zur Ermittlung der Druckdifferenz $\Delta p_v$ und/oder des Volumenstromes $\dot{V}$ aufgrund der Ausgangssignale des Reglers (22, 35, 45) und des Hubsensors (10) verbunden ist.

2. Einrichtung nach Anspruch 1, dadurch gekennzeichnet, daß wenigstens einer der Verbindungskanäle (16, 17, 18) eine Verengung (20) aufweist.

3. Einrichtung nach Anspruch 2, dadurch gekennzeichnet, daß die einzige Verengung (20) in dem vom ersten Raum (13) ausgehenden Verbindungskanal (16) angeordnet ist und aus einem Kapillarrohr besteht, dessen lichte Weite und dessen Länge die mittlere Öffnungs- und Schließgeschwindigkeit $\dot{s}$ bzw. $\dot{s}_k$ des Ventiltellers mitbestimmen.

4. Einrichtung nach Anspruch 1, dadurch gekennzeichnet, daß der Rechner (21) aus den Zeitspannen $T$ und $T_K$, während denen das als Ventilteller ausgebildete Ventilorgan (6) öffnet bzw. schließt, ein Verhältnis

$$\varepsilon_T = \frac{T}{T + T_k}$$

bildet und daraus unter Berücksichtigung des mittleren Hubes $\bar{s}$ des Ventiltellers (6) den Druckabfall $\Delta p_v$ und den Volumenstrom $\dot{V}$ als Funktionen $f_1$ bzw. $f_2$ von $\bar{s}$ und $\varepsilon_T$ bestimmt, nach den Formeln :
$\Delta p_v = f_1 (\bar{s}, \varepsilon_T)$ und
$\dot{V} = f_2 (\bar{s}, \varepsilon_T)$, wobei $\bar{s}$ den Mittelwert zwischen zwei Hüben $s_{max}$ und $s_{Kmin}$ bedeutet, die am Ende der Zeitspannen $T$ bzw. $T_K$ auftreten.

5. Einrichtung nach Anspruch 4, dadurch gekennzeichnet, daß der Druckabfall $\Delta p_v$ und der Volumenstrom $\dot{V}$ bestimmt sind nach den Formeln :

$$\Delta p_v = \frac{F_F(s)}{A_M \cdot \varepsilon_T - A_V} \quad \text{und}$$

$$\dot{V} = \bar{s} \cdot d_v \cdot \pi \sqrt{\frac{2\,F_F(s)}{\rho(A_M \cdot \varepsilon_T - A_v)}} \cdot f_v(s)$$

wobei
$F_F(s)$ die Federkraft beim momentanen Hub s des Ventiltellers (6),
$A_M$ die wirksame Fläche des Dichtungsgliedes (7 ; 12),
$A_v$ die wirksame Fläche des Ventiltellers (6)
$\rho$ die Dichte des Durchflußmediums und
$f_v(s)$ die Ventilkennlinie des Stellgliedes (1) bedeuten.

6. Einrichtung nach Anspruch 5, dadurch gekennzeichnet, daß der Regler (22) als Zweipunktregler mit Hysterese ausgebildet ist und das Steuerventil (19) zwei stabile Zustände hat.

7. Einrichtung nach Anspruch 5, dadurch gekennzeichnet, daß das Steuerventil (34) einen zusätzlichen dritten stabilen Steuerzustand aufweist, bei dem alle Verbindungskanäle (16, 17, 18) zu den drei Räumen (13, 14, 15) des Stellgliedes (1) verschlossen sind, daß als Regler (35) ein Dreipunkt-Regler dient, dessen Auf-Befehle am Steuerventil (34) den zweiten Steuerzustand und dessen Zu-Befehle den ersten Steuerzustand erzeugen und dessen Neutralstellung bei abgeglichener Regelstrecke den dritten Steuerzustand bewirkt, daß ein Störgrößengeber (38) vorhanden ist zwecks Abgabe periodisch wiederkehrender, in abwechselnder Richtung wirkender Störsignale (41) zur impulsweisen Verstimmung des Regelkreises in Auf- und Zu-Richtung, wobei der Rechner (21) das Verhältnis $\varepsilon_T$ mindestens aufgrund zweier aufeinanderfolgender Störsignale (41) bildet, und daß der Rechnet (21) bei nacheinander gleichbleibenden Verhältnissen $\varepsilon_T$ die Befehle zum Störgrößengeber (38) wenigstens zeitweilig unterbindet.

8. Einrichtung nach Anspruch 6, dadurch gekennzeichnet, daß zur Betätigung des Steuerventiles (18) ein Elektromagnet dient, der vom Signal am Ausgang (23) des Reglers (22) beeinflußt wird, und daß das Steuerventil (19) im stromlosen Zustand den ersten Raum (13) mit dem zweiten Raum (14) verbindet.

9. Einrichtung nach Anspruch 8, dadurch gekennzeichnet, daß in dem vom ersten Raum (13) ausgehenden Verbindungskanal (16) ein zusätzliches Ventil (29) vorhanden ist zum Absperren des Verbindungskanales (16) während wenigstens eines Teiles der Zeiten, in denen der Istwert des Reglers (22) gleich dem Sollwert ist.

10. Einrichtung nach Anspruch 9, dadurch gekennzeichnet, daß auch das zusätzliche Ventil (29) durch einen Elektromagneten betätigbar ist und im stromlosen Zustand den Durchfluß freigibt.

11. Einrichtung nach einem der Ansprüche 6 oder 7, dadurch gekennzeichnet, daß das Steuerventil (19, 34) als Schieberventil ausgebildet ist, das durch einen vom Regler (22, 35) angesteuerten Motorantrieb betätigbar ist, und daß eine Rückstelleinrichtung das Steuerventil (19, 34) bei Stromausfall in die den ersten und den zweiten Raum (13 bzw. 14) verbindende Stellung zwangsweise rückstellt.

12. Einrichtung nach einem der Ansprüche 1 bis 11, dadurch gekennzeichnet, daß zur Regelung des Volumenstromes $\dot{V}$ mindestens ein Regler (22) seinen Sollwert des Volumenstromes $\dot{V}$ vergleicht.

13. Einrichtung nach einem der Ansprüche 1 bis 11, dadurch gekennzeichnet, daß zur Kaskadenregelung mehrere Regler (47, 50, 52) dem auf das Steuerventil (19, 34) einwirkenden Regler (45) übergeordnet sind.

14. Einrichtung nach einem der Ansprüche 1 bis 11, dadurch gekennzeichnet, daß der Rechner (21) zur Wärmemengenmessung bei einer Warmwasserheizung verwendet wird und unter Berücksichtigung der Temperaturdifferenz $\Delta\vartheta$ zwischen einer Vorlauftemperatur $\vartheta_V$ und einer Rücklauftemperatur $\vartheta_R$ sowie des Volumenstromes $\dot{V}$ zusätzlich die entnommene Wärmemenge erfaßt.

## Claims

1. A device for detecting the volumetric flow of a liquid medium through an adjusting element (1), which is designed as a straight-way valve (4) and comprises an inlet nozzle (2) and an outlet nozzle (3), of a control section with an elastically deformable sealing element (7, 12) such as a diaphragm which initiates an opening movement of a valve member (6) of the straight-way valve (4) against a spring force $F_F$, and with a stroke sensor (10) for detecting the position of the valve member (6), from which the volumetric flow $\dot{V}$ can be derived by taking into consideration the pressure difference $\Delta p_v$ existing over the straight-way valve (4), in which a controlled control valve (19, 34) is connected via connecting conduits (16, 17, 18) to various chambers of the straight-way valve (4), characterised in that the control valve (19 ; 34) can be controlled by at least one controller (22 ; 35, 45) and connects a first chamber (13) of the straight-way valve (4) limited by the sealing element (7, 12) via the connecting conduits (16, 17, 18) in a first stable control state to a second chamber (14) and in a second stable control state to the third chamber (15), in that the second chamber (14) comprises the outlet nozzle (3) and the third chamber (15) the inlet nozzle (2), in that the effective surfaces of the sealing element (7, 12) and of the valve member (6) designed as a valve disc as well as the spring force $F_F$ are selected such that, in the control state, the pressure difference $\Delta p_v$ arising over the straight-way valve (4) opens this straight-way valve (4) by means of the valve disc and, in the first control state, the spring force $F_F$ closes this straight-way valve (4) by means of the valve disc, and in that the stroke sensor (10) is connected to a computer (21) for determining the pressure difference $\Delta p_v$ and/or the volumetric flow $\dot{V}$ on the basis of the starting signals of the controller (22, 35, 45) and of the stroke sensor (10).

2. A device according to Claim 1, characterised in that at least one of the connecting conduits (16, 17, 18) comprises a constriction (20).

3. A device according to Claim 2, characterised in that the single constriction (20) is arranged in the connecting conduit (16) emanating from the first chamber (13) and consists of a capillary tube whose internal diameter and whose length define the average opening and closing speed $\dot{s}$ and $\dot{s}_k$ of the valve disc.

4. A device according to Claim 1, characterised in that the computer (21) forms from the time intervals T and $T_K$, during which the valve member (6) designed as a valve disc opens and closes, a ratio

$$\varepsilon_T = \frac{T}{T + T_k}$$

and, from it, while taking into consideration the average stroke $\bar{s}$ of the valve disc (6), determines the pressure drop $\Delta p_v$ and the volumetric flow $\dot{V}$ as functions $f_1$ or $f_2$ of $\bar{s}$ and $\varepsilon_T$, according to the formulae :
$\Delta p_v = f_1 (\bar{s}, \varepsilon_T)$, and
$\dot{V} = f_2 (\bar{s}, \varepsilon_T)$, wherein $\bar{s}$ represents the mean value between two strokes $s_{max}$ and $s_{K_{min}}$, which occur at the end of the time intervals T and $T_K$.

5. A device according to Claim 4, characterised in that the pressure drop $\Delta p_v$ and the volumetric flow $\dot{V}$ are determined according to the formulae :

$$\Delta p_v = \frac{F_F(s)}{A_M \cdot \varepsilon_T - A_V} \quad \text{and}$$

$$\dot{V} = \bar{s} \cdot d_v \cdot \pi \sqrt{\frac{2\, F_F(s)}{\rho(A_M \cdot \varepsilon_T - A_v)}} \cdot f_v(s)$$

wherein

$F_F(s)$ represents the spring force during the instantaneous stroke s of the valve disc (6),

$A_M$ represents the effective surface area of the sealing element (7 ; 12),

$A_V$ represents the effective surface area of the valve disc (6),

$\rho$ represents the density of the flow medium, and

$f_v(s)$ represents the valve characteristic curve of the adjusting element (1).

6. A device according to Claim 5, characterised in that the controller (22) is designed as a two-position controller with hysteresis and the control valve (19) has two stable states.

7. A device according to Claim 5, characterised in that the control valve (34) has an additional third stable control state in which all connecting conduits (16, 17, 18) to the three chambers (13, 14, 15) of the adjusting element (1) are closed, in that, as controller (35) there serves a three-position controller whose open instructions produce the second control state at the control valve (34) and whose close instructions produce the first control state and whose neutral position causes the third control state when the control section is balanced, in that a disturbance variable generator (38) is provided for the delivery of periodicaly recurring disturbance signals (4) which act in alternate directions for the pulsed staggering of the control circuit in the opening and closing direction, the computer (21) forming the ratio $\varepsilon_T$ at least on the basis of two successive disturbance signals (41), and in that the computer (21) prevents the instructions to the disturbance variable generator (38) at least intermittently when the ratios $\varepsilon_T$ remain constant in succession.

8. A device according to Claim 6, characterised in that an electromagnet which is influenced by the signal at the output (23) of the controller (22) serves to actuate the control valve (18) and in that the control valve (19) connects the first chamber (13) to the second chamber (14) in the dead state.

9. A device according to Claim 8, characterised in that an additional valve (29) is provided in the connecting conduit (16) emanating from the first chamber (13) for blocking the connecting conduit (16) during at least a proportion of the times in which the actual value of the controller (22) is equal to the desired value.

10. A device according to Claim 9, characterised in that the additional valve (29) can also be actuated by an electromagnet and clears the passage in the dead state.

11. A device according to one of Claims 6 or 7, characterised in that the control valve (19, 34) is designed as a slide valve which can be actuated by a motor drive means started by the controller (22, 35) and in that a restoring device forcibly restores the control valve (19, 34) into the position connecting the first and second chamber (13 and 14) in the event of a power failure.

12. A device according to one of Claims 1 to 11, characterised in that, in order to control the volumetric flow $\dot{V}$, at least one controller (22) compares its desired value with the actual value of the volumetric flow $\dot{V}$ determined by the computer (21).

13. A device according to one of Claims 1 to 11, characterised in that several controllers (47, 50, 52) are superimposed on the controller (45) acting upon the control valve (19, 34) for cascade control.

14. A device according to one of Claims 1 to 11, characterised in that the computer (21) is used for measuring the quantity of heat in a hot water heating system and, by taking into consideration the temperature difference $\Delta\vartheta$ between a forward flow temperature $\vartheta V$ and a return flow temperature $\vartheta_R$ as well the volumetric flow $\dot{V}$, additionally detects the quantity of heat removed.

**Revendications**

1. Dispositif pour détecter le débit volumétrique d'un milieu liquide traversant un organe de réglage (1) d'une section de réglage, réalisé sous la forme d'une soupape de traversée (4) et comprenant une tubulure d'arrivée (2) et une tubulure de départ (3), et comportant un organe d'étanchéité (7, 12), comme par exemple une membrane, déformable élastiquement et déclenchant un déplacement d'ouverture d'un organe (6) de la soupape de traversée (4) à l'encontre de la force $F_F$ d'un ressort, et un détecteur de course (10) servant à déterminer la position de l'organe de soupape (6), à partir de laquelle, en tenant compte de la différence de pression $\Delta p_v$ présente dans la soupape de traversée (4), on peut dériver le débit volumétrique $\dot{V}$, pour lequel une soupape de commande commandée (19, 34) est reliée par l'intermédiaire de canaux de liaison (16, 17, 18) à différentes chambres de la soupape de traversée (4), caractérisé en ce que la soupape de commande (19 ; 34) peut être commandée par au moins un régulateur (22 ; 35, 45) et relie une première chambre (13), limitée par l'organe d'étanchéité (16, 12), de la soupape de traversée (4) par l'intermédiaire des canaux de liaison (16, 17, 18) à une seconde chambre (14), dans un premier état stable de commande, et à une troisième chambre (15), dans un second état stable de commande, que la seconde chambre (14) contient la tubulure de sortie (3) et que la troisième chambre (15) contient la tubulure d'arrivée (2), que les surfaces actives de l'organe d'étanchéité (7, 12) et de l'organe de soupape (6) réalisé sous la forme d'un plateau de soupape, et la force $F_F$ du ressort sont choisies de manière que, dans le second état de commande, la différence de pression $\Delta p_v$, qui apparaît dans la soupape de traversée (4), ouvre cette soupape de traversée (4) au moyen du plateau de soupape et que, dans le premier état de commande, la force $F_F$ ferme cette soupape de traversée (4) au moyen du plateau de soupape, et que le détecteur de course (10) est relié à un ordinateur (21) servant à déterminer la différence de pression $\Delta p_v$ et/ou le débit volumétrique $\dot{V}$ sur la base des signaux de sortie du régulateur (22, 35, 45) et du détecteur de course (10).

2. Dispositif selon la revendication 1, caractérisé en ce qu'au moins un des canaux de liaison (16, 17, 18) comporte un rétrécissement (20).

3. Dispositif selon la revendication 2, caractérisé en ce que le rétrécissement unique (20) est situé dans le canal de liaison (16) partant de la première chambre (13) et est constitué par un tube capillaire, dont le diamètre intérieur et la longueur déterminent conjointement la vitesse moyenne d'ouverture et de fermeture $\dot{s}$ ou $\dot{s}_k$ du plateau de soupape.

4. Dispositif selon la revendication 1, caractérisé en ce que l'ordinateur (21) forme, à partir des intervalles de temps $T$ et $T_X$, pendant lesquels l'organe de soupape (6) réalisé sous la forme d'un plateau de soupape s'ouvre ou se ferme, un rapport

$$\varepsilon_T = \frac{T}{T + T_k}$$

et détermine, à partir de là, en tenant compte de la course moyenne $\bar{s}$ du plateau de soupape (6), la chute de pression $\Delta p_v$ et le débit volumétrique $\dot{V}$ sous la forme de fonctions $f_1$ et $f_2$ de $\bar{s}$ et de $\varepsilon_T$, conformément aux formules :

$\Delta p_v = f_1 \ (\bar{s}, \ \varepsilon_T)$ et

$\dot{V} = f_2 \ (\bar{s}, \ \varepsilon_T)$, $\bar{s}$ représentant la valeur moyenne entre deux courses $s_{max}$ et $s_{K_{min}}$, qui sont obtenues à la fin des intervalles de temps $T$ et $T_K$.

5. Dispositif selon la revendication 4, caractérisé en ce que la chute de pression $\Delta p_v$ et le débit volumétrique $\dot{V}$ sont déterminés conformément aux formules :

$$\Delta p_v = \frac{F_F(s)}{A_M \cdot \varepsilon_T - A_V} \quad \text{et}$$

$$\dot{V} = \bar{s} \cdot d_v \cdot \pi \ \sqrt{\frac{2 \, F_F(s)}{\rho (A_M \cdot \varepsilon_T - A_v)}} \cdot f_v(s)$$

avec

$F_F(s)$ : force du ressort pour la course instantanée $s$ du plateau de soupape (6),

$A_M$ : surface active de l'organe d'étanchéité (7 ; 12),

$A_V$ : surface active du plateau de soupape (6),

$\rho$ : densité du milieu traversant, et

$f_v(s)$ : courbe caractéristique de la soupape de l'organe de réglage (1),

6. Dispositif selon la revendication 5, caractérisé en ce que le régulateur (22) est réalisé sous la forme d'un régulateur à deux positions, présentant une hystérésis et que la soupape de commande (19) possède deux états stables.

7. Dispositif selon la revendication 5, caractérisé en ce que la soupape de commande (34) possède un troisième état stable supplémentaire de commande, dans lequel tous les canaux de liaison (16, 17, 18) aboutissant aux trois chambres (13, 14, 15) de l'organe de réglage (1) sont fermés, on utilise comme régulateur (35) un régulateur à trois points, dont les ordres de fermeture envoyés à la soupape de commande (34) ramènent cette dernière dans le second état de commande et dont les ordres de fermeture amènent cette soupape dans le premier état de commande et dont la position neutre aboutit, lorsque la section de réglage est équilibrée, au troisième état de commande, qu'il est prévu un générateur (38) de grandeur parasites, servant à délivrer des signaux parasites (41) qui se répètent périodiquement et agissent dans des sens alternants, pour désaccorder de façon impulsionnelle le circuit réglé dans le sens de la fermeture et de l'ouverture, l'ordinateur (21) formant le rapport $\varepsilon_T$ au moins sur la base de deux signaux parasites (41) successifs, et que lorsque les rapports $\varepsilon_T$ restent constants de façon successive, l'ordinateur (21) supprime au moins temporairement les ordres envoyés au générateur de grandeurs parasites (38).

8. Dispositif selon la revendication 6, caractérisé en ce que pour l'actionnement de la commande de soupape (18) on utilise un électroaimant, qui est influencé par le signal présent à la sortie (23) du régulateur (22), et que la soupape de commande (19) relie, dans l'état où elle est non alimentée en courant, la première chambre (13) à la seconde chambre (14).

9. Dispositif selon la revendication 8, caractérisé en ce qu'une soupape supplémentaire (29) est prévue dans le canal de liaison (16) partant de la première chambre (13) pour bloquer le canal de liaison (16) pendant au moins une partie des intervalles de temps, pendant lesquels la valeur réelle du régulateur (22) est égale à la valeur de consigne.

10. Dispositif selon la revendication 9, caractérisé en ce que la soupape supplémentaire (29) peut être également actionnée par un électroaimant et, dans son état non alimenté en courant, libère le passage.

11. Dispositif selon l'une des revendications 6 ou 7, caractérisé en ce que la soupape de commande (19, 34) est réalisée sous la forme d'un distributeur à tiroir, qui peut être actionné par un dispositif d'entraînement à moteur commandé par le régulateur (22, 35), et que son dispositif de rappel ramène de façon forcée la soupape de commande (19, 34), dans le cas d'une défaillance de courant, dans sa position reliant les première et seconde chambres (13 et 14).

12. Dispositif selon l'une des revendications 1 à 11, caractérisé en ce que pour le réglage du débit volumétrique $\dot{V}$, au moins un régulateur (22) compare la valeur de consigne de ce débit à la valeur réelle du débit volumétrique $\dot{V}$, déterminée par l'ordinateur (21).

13. Dispositif selon l'une des revendications 1 à 11, caractérisé par le fait que pour le réglage en cascade, plusieurs régulateurs (47, 50, 52) ont une action de commande prioritaire sur le régulateur (45) agissant sur la soupape de commande (19, 34).

14. Dispositif selon l'une des revendications 1 à 11, caractérisé en ce que l'ordinateur (21) est utilisé pour mesurer la quantité de chaleur dans le cas d'un chauffage à eau chaude et détermine en outre la quantité de chaleur prélevée, en tenant compte de la différence de température $\Delta\vartheta$ entre une température $\vartheta_V$ dans le sens aller et une température $\vartheta_R$ dans le sens retour, ainsi que du débit volumétrique $\dot{V}$.

Fig. 1

$\overset{\circ}{V} = f_1(\bar{s}, \varepsilon_T)$

Fig. 2

Fig. 3

$\overset{\circ}{V} = f_2(\bar{s}, \varepsilon_T)$

Fig. 4

# Fig. 5

# Fig. 6